# EUROPEAN PATENT APPLICATION

(11) **EP 3 587 873 A1**
(43) Date of publication of application: **01.01.2020**
(21) Application number: 18758062.6
(22) Date of filing: 21.02.2018
(51) Int. Cl.: F16J 15/44, F04D 29/12, F16J 15/54

(54) **SEAL DEVICE**

(30) Priority: 22.02.2017 JP 2017030757
(71) Applicant: Eagle Industry Co., Ltd., Minato-ku Tokyo 105-8587 (JP)
(72) Inventor: TOKUNAGA Yuichiro, Tokyo 105-8587 (JP); INOUE Hideyuki, Tokyo 105-8587 (JP); KIMURA Wataru, Tokyo 105-8587 (JP); IGUCHI Tetsuya, Tokyo 105-8587 (JP); KASAHARA Hidetoshi, Tokyo 105-8587 (JP); HIROMATSU Jun, Tokyo 105-8587 (JP); KUROKI Yasuhiro, Tokyo 105-8587 (JP); KIKUCHI Ryu, Tokyo 105-8587 (JP)
(74) Representative: TBK
(86) International application number: PCT/JP2018/006092
(87) International publication number: WO 2018/155461

(57) **Abstract**

The present invention is to provide a seal device in which a floating ring follows movement of a rotation shaft, and a sealing operation and a vibration damping function can be exerted. A seal device (10) that seals between a housing (11) and a rotation shaft (20) passing through the housing (11) includes a floating ring (15) arranged with a gap h with respect to the rotation shaft (20), and the floating ring (15) includes at least one elastically supporting means (18) that supports in the circumferential direction.

## Description

### TECHNICAL FIELD

The present invention relates to a seal device that seals between a housing and a rotation shaft passing through the housing, and in particular, relates to a seal device including a floating ring used for a rotation shaft of a fluid machine such as a pump.

### BACKGROUND ART

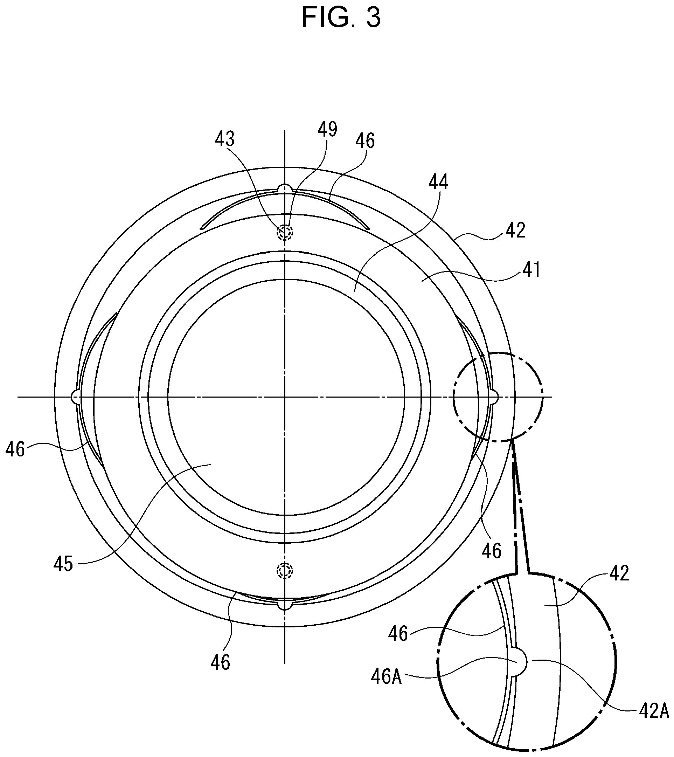

Conventionally, in a rotating fluid machine such as a pump, in order to seal a fluid, a floating seal is used, and the floating seal shown in FIG. 3 is known (hereinafter, called as "Conventional Art 1," for example, refer to Patent Citation 1.) This conventional art includes a rotation shaft 45 of a fluid machine, a sleeve 44 attached to an outer periphery of the rotation shaft 45 and rotated integrally with the rotation shaft, a seal ring 41 loosely fitted to the sleeve 44 while having a clearance, plate springs 46 provided at four points of an outer periphery of the seal ring 41, and a retainer 42 that accommodates the seal ring 41, and in a state where projections 46A of the plate springs 46 are engaged with grooves 42A provided in the retainer 42, the seal ring 41 is supported by the plate springs 46. By the wedge effect (effect of dynamic pressure generated in a wedge portion) generated between an inner peripheral face of the seal ring 41 and the sleeve 44 of the rotation shaft 45 and the Lomakin effect (aligning effect by flow losses of a fluid between surfaces of a seal ring and a shaft at the time of generation of a seal pressure difference), a gap between the inner peripheral face of the seal ring 41 and the rotation shaft 45 is held to be fixed, and the seal ring 41 is pressed in the axial direction from the high pressure fluid side to the retainer 42 side, so that the seal ring 41 and the retainer 42 are tightly sealed. The seal ring 41 has detent pins 43, and the detent pins 43 are inserted in holes 49 of the retainer, so that movement of the seal ring 41 in the rotating direction with respect to the retainer 42 is regulated.

### CITATION LIST

### Patent Literature

Patent Citation 1: JP 57-154562 A

### SUMMARY OF INVENTION

### Technical Problem

However, in Patent Citation 1, a fluid flowing through the gap between the rotation shaft 45 and the seal ring 41 is rotated at speed close to rotating speed of the rotation shaft 45. Thus, the seal ring 41 is pulled in the circumferential direction by a viscosity property of the fluid flowing through the gap between the rotation shaft 45 and the seal ring 41. Therefore, the detent pins 43 attached to the seal ring 41 intermittently collide with the holes 49 of the retainer, and surface roughening occurs in the detent pins 43 and the retainer holes 49, so that there is a possibility that the detent pins 43 are anchored to the retainer holes 49. As a result, the seal ring 41 is restricted by the retainer 42, so that the seal ring 41 cannot follow movement of the rotation shaft 45. Thus, there are possibilities that the rotation shaft and the seal ring are brought into contact with each other and damaged, and that a radial gap is increased more than an optimal value and a proper sealing operation cannot be obtained.

The present invention is achieved focusing on such a problem, and an object thereof is to provide a seal device in which a floating ring follows movement of a rotation shaft, and a sealing operation and a vibration damping function can be exerted.

### Solution to Problem

In order to solve the foregoing problem, a seal device of the present invention is a seal device that seals between a housing and a rotation shaft passing through the housing, the seal device being characterized by including a floating ring arranged with a gap with respect to the rotation shaft, the seal device being characterized in that the floating ring includes at least one elastically supporting means that supports in the circumferential direction.

According to this aspect, since the floating ring is elastically supported in the circumferential direction with respect to the housing, the floating ring does not collide with the housing. The floating ring follows movement of the rotation shaft without being restricted by the housing, and a sealing operation can be exerted.

The seal device of the present invention is characterized in that the elastically supporting means is arranged symmetrically with respect to a vertical line passing through center of the floating ring.

According to this aspect, the floating ring is supported by the elastically supporting means in the circumferential direction and the radial direction. Thus, a clearance between the rotation shaft and the floating ring is properly held, and the sealing operation can be exerted.

An inner peripheral portion of the housing includes a recessed portion formed to extend to the radially outside, an outer peripheral portion of the floating ring includes a projecting portion projecting to the radially outside, the projecting portion to be engaged with the recessed portion, and the elastically supporting means is arranged between the recessed portion and the projecting portion and includes an elastic member to be stretched in the circumferential direction.

According to this aspect, the floating ring can be elastically supported in the circumferential direction.

The seal device of the present invention is characterized in that the floating ring is made of a material having a high sliding property.

According to this aspect, since the floating ring is made of a material having a high sliding property, anchoring to the elastically supporting means can be prevented. Thus, the floating ring follows the movement of the rotation shaft without being restricted by the housing, and the sealing operation can be exerted.

### BRIEF DESCRIPTION OF DRAWINGS

[FIG. 1] FIG. 1 is a front sectional view of a seal device according to an embodiment of the present invention.
[FIG. 2] FIG. 2 is a sectional view (side sectional view) taken along the line A-A of FIG. 1.
[FIG. 3] FIG. 3 is a side sectional view of a conventional seal device.

### DESCRIPTION OF EMBODIMENTS

A mode for carrying out a seal device according to the present invention will be described in detail with reference to the drawings. However, the present invention is not interpreted while being limited to this. As long as not departing from the scope of the present invention, various modifications, corrections, and improvements can be added based on the knowledge of those skilled in the art.

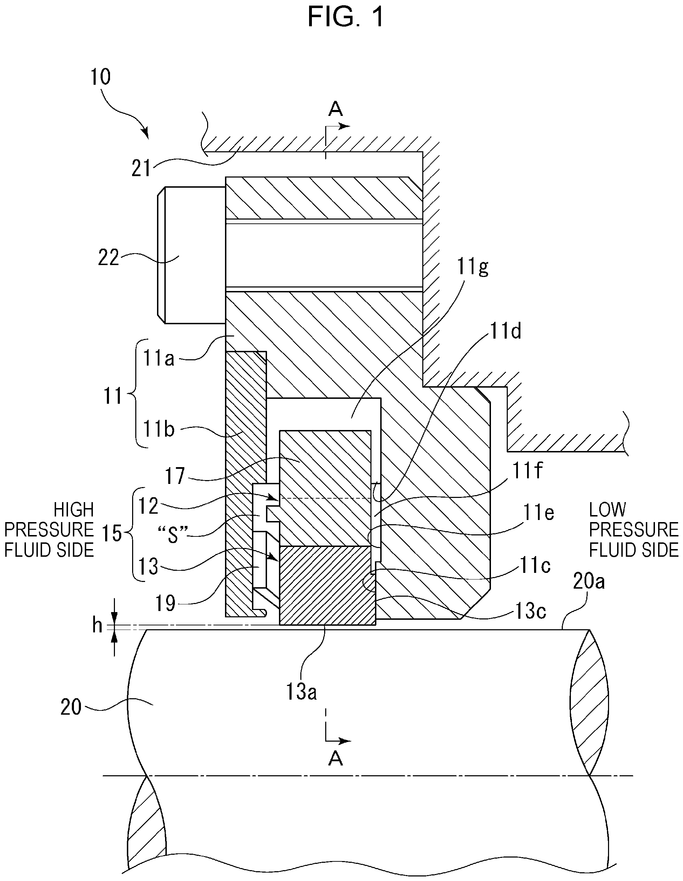

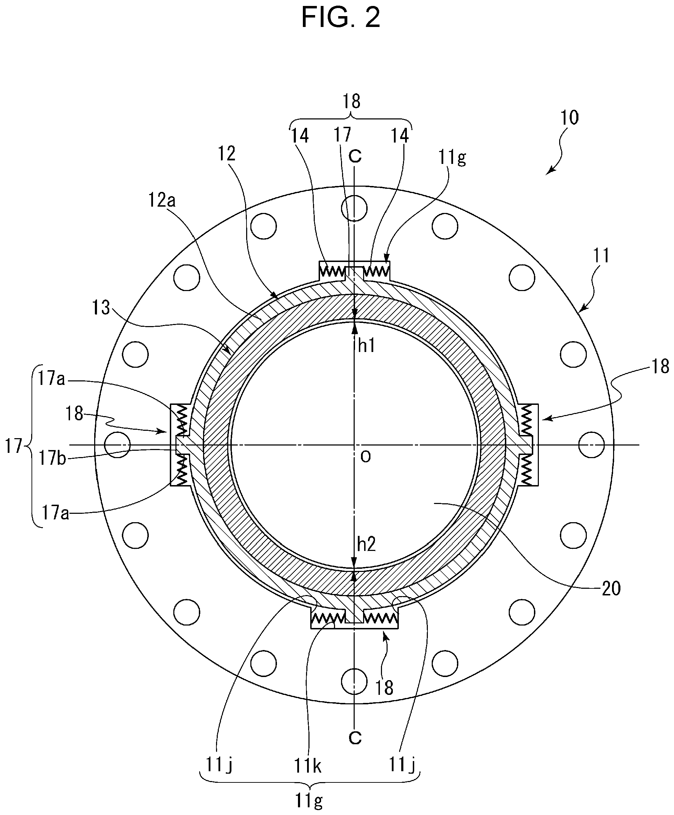

A seal device 10 according to an embodiment of the present invention will be described with reference to FIGS. 1 and 2. A rotation shaft 20 of a fluid machine is arranged so as to pass through a casing 21, and the left side is the high pressure side and the right side is the low pressure side. The seal device 10 is mainly formed by a floating ring 15, and a housing 11 that accommodates the floating ring 15.

The housing 11 is mainly formed by a holder 11a and a flange 11b. The holder 11a is fixed to the casing 21 by a fastening means 22. Each of the holder 11a and the flange 11b has a predetermined gap from the rotation shaft 20, and has a hole through which the rotation shaft 20 passes. An inner peripheral portion of the holder 11a has an accommodation portion 11f surrounded by an inner peripheral wall portion 11d and a radial wall portion 11e. The floating ring 15 is accommodated in a space S surrounded by the inner peripheral wall 11d of the housing 11, the radial wall 11e and the flange 11b respectively partitioning the inner peripheral wall 11d in the axial direction, and the rotation shaft 20 passing through the housing 11. In the inner peripheral wall portion 11d of the accommodation portion 11f of the inner peripheral portion of the holder, plural (four in the present embodiment) recessed portions 11g having substantially rectangular sections and extending to the radially outside, each of the recessed portions having a pair of side walls 11j and a ceiling wall 11k, are formed at equal intervals while being separated in the circumferential direction. The radial wall portion 11e has a holder side secondary seal face 11c slightly popping out of the radial wall portion 11e on the inner diameter side.

The floating ring 15 is mainly formed by a seal ring 13, and a retainer 12 fitted to an outer periphery of the seal ring 13.

The seal ring 13 is a ring-shaped member having a substantially-rectangular section, made of a material having a favorable sliding property such as carbon. An inner peripheral face 13a of the seal ring 13 is formed in a cylindrical face having a minute radial gap h with respect to an outer peripheral face 20a of the rotation shaft 20.

The retainer 12 is an annular member made of a material such as metal including stainless, steel, copper, aluminum, etc., plastic, synthetic resin, and FRP reinforced by carbon fibers or glass fibers, and formed to have a smaller diameter than the accommodation portion 11f of the holder 11a. The retainer 12 adds compression force to the seal ring 13 by being tightly fitted to the outer periphery of the seal ring 13 made of carbon, etc. Thereby, even when the seal ring 13 is made of a brittle material such as carbon, breakage of the seal ring 13 due to contact with the rotation shaft 20, etc. can be prevented. In an outer peripheral portion of the retainer 12, the same number of projecting portions 17 as the recessed portions 11g, the projecting portions having substantially rectangular sections and projecting to the radially outside, the projecting portions to be engaged with the recessed portions 11g formed in the accommodation portion 11f of an inner peripheral portion of the housing 11 are formed and provided at equal intervals. The projecting portions 17 are convex projections having substantially rectangular sections, each of the projecting portions having a pair of end portion walls 17a extending in the radial direction and an outer peripheral wall 17b that connects the pair of end portion walls 17a. The projecting portion 17 is formed to have narrower width than circumferential width of the recessed portion 11g. In the projecting portion 17, in a state of being engaged with the recessed portion 11g, a clearance portion in which elastic members 14 are accommodated is formed between the side walls 11j, 11j of the recessed portion 11g and the end portion walls 17a, 17a of the projecting portion 17. The projecting portions 17 may be formed integrally with the retainer 12, or the projecting portions 17 formed as separate bodies from the retainer 12 may be attached to the retainer 12.

An elastically supporting means 18 of the present invention is formed by the elastic member 14 arranged between the end portion wall 17a of the projecting portion 17 and the side wall 11j of the recessed portion 11g of the housing 11. The elastic member 14 is made of a material excellent in a stretching property such as a coil spring, a plate spring, and rubber, and the material is selected according to a temperature condition for use and required supporting force. The projecting portion 17 provided in the outer peripheral portion of the retainer 12 is engaged with the recessed portion 11g of the holder 11a, and the elastic members 14 are attached to both the sides of the projecting portion 17 so as to stretch in the circumferential direction in the clearance portion between the side walls 11j, 11j of the recessed portion 11g and the end portion walls 17a, 17a of the projecting portion 17.

As shown in FIG. 2, regarding the floating ring 15, the elastically supporting means 18 are attached substantially symmetrically with respect to a vertical line C-C passing through center O of the housing 11. Thus, the floating ring 15 is supported by the elastically supporting means 18 in a noncoupled state, and the elastically supporting means 18 that support in the vertical direction and the elastically supporting means 18 that support in the lateral direction can support without influencing each other. Self-weight of the floating ring 15 can be supported by the pair of elastically supporting means 18 attached in the horizontal direction, and can be held such that displacement between center of the floating ring 15 and the center of the housing 11 is ignorable. Thus, a gap can be held over the entire circumference between the inner peripheral face 13a of the seal ring 13 and the outer peripheral face 20a of the rotation shaft 20. Therefore, when the number (for example, a natural number of two or more), size, and a shape of the elastically supporting means 18 are properly determined so that an upper radial gap h1 between the floating ring 15 and the rotation shaft 20 can be ensured, the floating ring 15 and the rotation shaft 20 can be in no contact with each other even during stoppage. In the present embodiment, the elastically supporting means 18 are arranged at four points on the upper, lower, left, and right sides at equal intervals but may be arranged anywhere as long as the upper radial gap h1 between the floating ring 15 and the rotation shaft 20 can be ensured. For example, the four elastically supporting means 18 of FIG. 2 may be inclined by 45 degrees and arranged substantially symmetrically with respect to the vertical line C-C passing through the center O of the housing 11. In a case where four or more elastically supporting means 18 are arranged, the elastically supporting means may also be arranged substantially symmetrically with respect to the vertical line C-C passing through the center O of the housing 11.

Since the floating ring 15 is biased by a bias means 19 such as a spring, a seal ring side secondary seal face 13c and the holder side secondary seal face 11c are tightly attached to each other, so that the seal ring 13 and the holder 11a are tightly sealed. Hereinafter, a tightly sealing means by tight attachment between the seal ring side secondary seal face 13c and the holder side secondary seal face 11c will be called as a secondary seal.

Next, operations of the seal device 10 having the above configuration will be described. During stoppage of the rotating fluid machine, the floating ring is supported in the circumferential direction by elastic repulsion force of the elastically supporting means 18, and the self-weight of the floating ring 15 can also be supported. Thus, the inner peripheral face 13a of the seal ring 13 is aligned in a state where minute radial gaps h1, h2 are held with respect to the outer peripheral face 20a of the rotation shaft 20 (refer to FIG. 2). That is, only by the elastically supporting means 18, the floating ring 15 is supported both in the circumferential direction and in the radial direction. Thus, even during the stoppage where no wedge effect is generated between the floating ring 15 and the rotation shaft 20, the seal ring 13 of the floating ring 15 and the rotation shaft 20 function to hold the minute radial gaps h1, h2. Thereby, even at the time of start-up of the rotating fluid machine where no dynamic pressure due to the wedge effect is generated, wear of the seal ring 13 can be prevented. At the time of the stoppage, in the secondary seal, since the floating ring 15 is biased by the bias means 19 such as a spring, tight sealing is made by tightly attaching the seal ring side secondary seal face 13c and the holder side secondary seal face 11c.

Even during running of the rotating fluid machine, the housing 11 and the floating ring 15 function to be supported in the circumferential direction by the elastic repulsion force of the elastically supporting means 18 and to also support the self-weight of the floating ring 15. At this time, even when the upper radial gap h1 is narrowed and the lower radial gap h2 is widened due to an influence of the self-weight of the floating ring 15, the dynamic pressure due to the wedge effect is generated in an upper part where the gap is decreased. Thus, alignment is made so that the radial gap h between the floating ring 15 and the rotation shaft 20 is uniform.

When the rotation shaft 20 runs out by vibration, by both the elastic repulsion force of the elastically supporting means 18 and the dynamic pressure due to the wedge effect, the seal ring 13 of the floating ring 15 and the rotation shaft 20 function to hold the radial gap h. Thus, the floating ring 15 exerts an effect of also regulating movement of the rotation shaft 20, so that vibration of the rotation shaft 20 can be reduced.

During the running, since the floating ring 15 is pressed further by pressure from the high pressure fluid side to the low pressure fluid side in addition to pressing force of the bias means 19, the seal ring side secondary seal face 13c and the holder side secondary seal face 11c are further tightly attached to each other. Thus, a sealing effect of the secondary seal is further enhanced.

The present invention exerts the following excellent effects.

During the stoppage of the rotating fluid machine, by the elastic repulsion force of the elastically supporting means 18, the seal ring 13 of the floating ring 15 and the rotation shaft 20 function to hold the radial gap h. Thus, even at the time of the start-up of the rotating fluid machine, wear of the seal ring 13 can be prevented. During the running of the rotating fluid machine, even when the radial gap h between the floating ring 15 and the rotation shaft 20 becomes non-uniform in the circumferential direction, the dynamic pressure due to the wedge effect is generated in the part where the gap is decreased. Thus, alignment is made so that the radial gap h between the floating ring 15 and the rotation shaft 20 is uniform. Thereby, during the stoppage and during the running, a favorable sealing state can be obtained, so that wear of the seal ring 13 can be prevented.

Even when the rotation shaft 20 runs out by vibration, by both the elastic repulsion force of the elastically supporting means 18 and the dynamic pressure due to the wedge effect, the floating ring 15 functions so that the seal ring 13 of the floating ring 15 and the rotation shaft 20 hold the radial gap h. Thus, the floating ring 15 exerts the effect of also regulating the movement of the rotation shaft 20, so that the vibration of the rotation shaft 20 can be reduced.

The seal ring 13 is made of a material excellent in a self-lubricating property and a sliding property such as carbon. Thus, even when the seal ring is always relatively displaced with respect to the holder side secondary seal face 11c during the running, wear, surface roughening, etc. can be prevented, so that the function of the secondary seal can be maintained over a long time.

The embodiment of the present invention is described above with the drawings. However, specific configurations are not limited to the embodiment but the present invention includes modifications and additions within a range not departing from the gist of the present invention.

For example, in the above embodiment, the floating ring 15 is an annular integrated body. However, the present invention is not limited to this but members formed by dividing in the circumferential direction may be assembled into an annular integrated body.

In the above embodiment, the floating ring 15 is biased by the bias means 19. However, without using the bias means 19, the seal ring side secondary seal face 13c and the holder side secondary seal face 11c may be further tightly attached to each other by the pressure from the high pressure fluid side to the low pressure fluid side, so as to form the secondary seal.

In the above embodiment, the retainer 12 is made of a material having a favorable sliding property such as plastic and synthetic resin. However, the present invention is not limited to this. For example, the retainer 12 may be made of metal such as stainless, steel, copper, and aluminum.

The present invention is mainly used for the purpose of the seal device but may be used as a damping device that damps vibration of a shaft.

### REFERENCE SIGNS LIST

- 10: Seal device
- 11: Housing
- 11a: Holder
- 11b: Flange
- 12: Retainer
- 13: Seal ring
- 14: Elastic member
- 15: Floating ring
- 17: Projecting portion
- 18: Elastically supporting means
- 19: Bias means
- 20: Rotation shaft
- 21: Casing
- 22: Fastening means
- h: Gap
- S: Space

## Claims

1. A seal device that seals between a housing and a rotation shaft passing through the housing, the seal device being **characterized by** comprising:
a floating ring arranged with a gap with respect to the rotation shaft, the seal device being **characterized in that**
the floating ring includes at least one elastically supporting means that supports in the circumferential direction.

2. The seal device according to claim 1, **characterized in that**
the elastically supporting means is arranged symmetrically with respect to a vertical line passing through center of the floating ring.

3. The seal device according to claim 1 or 2, **characterized in that**
an inner peripheral portion of the housing includes a recessed portion formed to extend to the radially outside,
an outer peripheral portion of the floating ring includes a projecting portion projecting to the radially outside, the projecting portion to be engaged with the recessed portion, and
the elastically supporting means is arranged between the recessed portion and the projecting portion and includes an elastic member to be stretched in the circumferential direction.

4. The seal device according to any of claims 1 to 3, **characterized in that**
the floating ring is made of a material having a high sliding property.
